(19) Europäisches Patentamt
European Patent Office
Office européen des brevets

(11) **EP 3 056 865 B1**

(12) **EUROPEAN PATENT SPECIFICATION**

(45) Date of publication and mention
of the grant of the patent:
**04.09.2019 Bulletin 2019/36**

(51) Int Cl.:
**G01D 3/036** (2006.01)

(21) Application number: **15000434.9**

(22) Date of filing: **13.02.2015**

(54) **Sensor arrangement**

Sensorenanordnung

Agencement de capteurs

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.08.2016 Bulletin 2016/33**

(73) Proprietor: **Sensirion AG
8712 Stäfa (CH)**

(72) Inventors:
• **Bühler, Johannes
CH-8712 Stäfa (CH)**
• **von Waldkirch, Marc
CH-8712 Stäfa (CH)**
• **Mayer, Felix
CH-8712 Stäfa (CH)**

(74) Representative: **Toleti, Martin
E.Blum & Co. AG
Vorderberg 11
8044 Zürich (CH)**

(56) References cited:
EP-A1- 1 152 232    DE-A1- 19 957 556
DE-A1-102011 080 229    US-A- 4 530 244
US-A- 5 458 000    US-A1- 2011 113 891

## Description

FIELD OF THE INVENTION

The present invention relates to a sensor arrangement and to a method for operating a sensor arrangement comprising a sensor chip.

BACKGROUND OF THE INVENTION

Pressure sensors and methods of manufacturing pressure sensors are known. In the United States patent no. US 7,704,774 B2 for example, there is described a pressure sensor, which is manufactured by joining two substrates, the first substrate comprising CMOS circuitry and the second being an SOI substrate. A cavity is formed in a top material layer of the first substrate, which is covered by the silicon layer of the second substrate. Part or all of the substrate of the second wafer is removed to form a membrane from the silicon layer. Alternatively it is further described that the cavity can be formed in the second substrate. The second substrate is electrically connected to the circuitry on the first substrate. The known design allows for the use of standard CMOS processes for integrating circuitry on the first substrate.

In pressure sensors the membrane may be sensitive to stress. Sensitive elements of other sensors may also be sensitive to stress. When such sensor is mounted to a carrier and is electrically connected thereto mechanical stress may be evoked and transmitted via electrical contacts or via mechanical joining elements to such stress sensitive elements of the respective sensor.

US 2011/13891 A1 shows an apparatus and methods for applying stress-induced offset compensation and/or scale factor correction in sensor devices. One sensor device includes an integrated circuit device, a transducer coupled to the ASIC device, and a stress sensor coupled to the transducer or the integrated circuit device and configured to measure stress on the sensor device independent of the transducer. Another sensor device includes a transducer, a sensor package enclosing the transducer, and a stress sensor coupled to the sensor device package and configured to measure stress on the sensor device independent of the transducer. A method includes detecting, via a stress sensor, an amount of stress being applied to the sensor device and adjusting, via the stress sensor and independent of the transducer, an output of the sensor device by the detected amount of stress.

In US 4,530,244, a transducer for sensing pressure is formed of a single crystal semiconductor chip having a cavity formed in one surface, wherein a tube to communicate pressure to the cavity surrounds the cavity. Pressure measuring sensors are disposed opposite the cavity and additional pressure-responsive sensors are disposed on the chip to provide a signal for compensating for zero shift temperature and pressure induced signals generated by the measuring sensors.

US 5,458,000 refers to a temperature and static pressure compensated differential pressure sensor which includes a semiconductor substrate in which a flexible, pressure responsive diaphragm is formed. A pressure responsive resonant microbeam is fabricated at the diaphragm periphery. For temperature compensation, a secondary resonant microbeam sensor is fabricated on the substrate at a peripheral location beyond the point of substrate attachment to a pressure tube or other support. For static pressure compensation, another secondary resonant microbeam can be positioned remote from the diaphragm and at a location of maximum substrate response to static pressure. A further resonant microbeam can be mounted at the diaphragm center to augment the signal due to diaphragm deflections. Also disclosed is an accelerometer including a proof mass, a rigid rim surrounding the proof mass, and a series of narrow, flexible bridges supporting the proof mass relative to the rim. The bridges flex responsive to accelerations, thus to allow the proof mass to move relative to the rim. At least one of the bridges incorporates a resonant microbeam for measuring acceleration by virtue of the induced strain from flexure of its associated bridge. For temperature compensation, a secondary resonant microbeam is fabricated along the rim.

DE 199 57 556 A1 refers to a pressure sensor which includes a frame which is at least partly formed of a semiconductor material. A membrane is held in the frame. A measurement resistor is arranged at a first location in or on the membrane. The resistor value is dependent on the deformation of the membrane. A compensation resistor is arranged at a second location on or in the membrane. The resistance of this is also dependent on the deformation of the membrane. A measuring arrangement measures the absolute and/or differential pressure on the sensor. The change in electric resistance of the measurement resistor is determined and the change in electric resistance of the compensation resistor is also determined.

DE 10 2011 080229 A1 introduces a method for testing a pressure sensor. The pressure sensor comprises a pressure cell with an elastic membrane on which a first and a second electromechanical transducer are arranged. A temperature sensor is provided for detecting temperatures at the two transducers. The first electromechanical transducer comprises a first temperature characteristic and the second electromechanical transducer comprises a second temperature characteristic. In a calibration procedure, the two temperature characteristics have been adjusted to each other. A malfunction of the temperature sensor and / or the transducers can be detected by a difference in the temperature-compensated readings significantly over- or undershooting a predetermined threshold.

EP 1 152 232 A1 refers to a semiconductor pressure sensor comprising a silicon substrate having a diaphragm strained according to a pressure applied, strain gauges provided on the diaphragm and made of a diffused resistor and a P-N junction region disposed in the vicinity of the diffused resistor and reversely biased.

## SUMMARY OF THE INVENTION

Hence, according to the invention, there is provided a sensor arrangement comprising a sensor chip and a compensator. The sensor chip comprises a sensor sensitive to a variable to be measured. Such variable may be, for example, one of pressure, flow of a gas, flow of a liquid, humidity, gas or temperature. For this purpose, the sensor comprises one or more elements sensitive to the variable. In addition, the sensor embodied in the sensor chip may comprise sensing means for determining a property of the sensitive element which property is representative of the variable to be measured, and / or for converting such property into an electrical signal, which signal is also referred to as sensor signal. For example, in a pressure sensor chip the variable to be measured is pressure, the sensitive element preferably is a suspended membrane integrated into the sensor chip which membrane deflects in response to pressure applied, and the sensing means includes two electrodes, a stationary one and another one coupled to or being integral in the suspended membrane for measuring a capacitance there between. The capacitance depends on a distance between the electrodes, and therefore depends on the pressure that deflects the membrane.

The sensor chip further includes a stress sensor sensitive to stress in the sensor chip. Stress in a three-dimensional element may in general be described by means of a temperature dependent tensor. In the present context of measuring stress, it is understood that not necessarily all components of a stress tensor are measured, but, for example, one component, or, in another example, two or more components. Such component may, for example, include stress normal to a surface such as tension or compression stress, or shear stress, or torsion stress. The stress sensor supplies a stress signal indicative of the stress sensed. Stress in the sensor chip may result from one or more of the following:

- Packaging of the sensor chip, in particular with a mold compound;
- Permanent soldering / mounting the sensor chip to a carrier, e.g. via solder balls or similar interconnects, via which stress may enter the sensor chip;
- Temporary contacting the sensor chip and in particular its interconnects, e.g. by means of pins, for conducting measurements during testing and / or calibration;
- Mounting of a device including the sensor chip;
- Using materials in the sensor chip or the sensor package with different thermal expansion coefficients;
- A carrier to which the sensor chip is mounted which carries itself is exposed to stress and which stress propagates via the electrical and / or mechanical connections to the sensor chip;
- Elements connected to the device comprising the sensor chip, such as inlet and outlet pipes of gas or liquid flow sensors.

A compensator receives the stress signal as well as the sensor signal, and determines and provides a stress compensated sensor signal. It is assumed, that the sensor signal provided by the sensor varies in response to stress. Hence, the compensator is configured to compensate the sensor signal for stress induced components, dependent on the stress signal supplied by the stress sensor. Therefore, values of stress compensated sensor signal are considered to be closer to real values of the variable than the values of the bare sensor signal.

The compensator is embodied on-chip, i.e. on the sensor chip also carrying the sensor. Accordingly, the sensor arrangement is identical to the sensor chip given that all components are arranged / integrated on the very same chip.

The compensator may be embodied as circuitry integrated in the substrate. For example, the compensator may include a final state machine, and / or look-up table/s, for determining the stress compensated sensor signal. A corresponding look-up table may include possible discrete stress values for the components of stress measured, and possible discrete sensor values as input parameters, and assign a stress compensated sensor signal value in return to each combination of sensor signal value and stress signal value(s). Presently stored stress compensated sensor values may also be interpolated in order to increase resolution.

In a different embodiment, the compensator may be embodied in form of a processor and associate software, or may be embodied in pure hardware.

It is emphasized, that the stress sensor preferably is different to the sensor. In some examples of a sensor, the sensor itself may make use of similar sensing means sensing strain, for example. For example, a deflection of a membrane of a pressure sensor may be detected by means of a strain sensor. However, the stress sensor is arranged for measuring stress in the sensor chip induced as a byproduct of mounting or otherwise mechanically contacting the sensor chip, which stress effects the sensor signal, and is not provided for supplying the sensor signal itself. In this context, the stress sensor preferably is arranged at a location different than the sensor, however, if possible in close vicinity.

The stress sensor is arranged at a location of the sensor chip that is exposed to stress. In one embodiment, the stress sensor is arranged in a direct path between a potential entrance of stress which may be the electrical contacts of the sensor chip, and the sensitive element, e.g. the membrane in case of a pressure sensor. In a different embodiment, the stress sensor is arranged outside such direct path, however, at a location where mechanical stress can be sensed.

In a preferred embodiment, and in case of a pressure sensor chip with a membrane spanning a cavity in a substrate, the stress sensor preferably is arranged in the substrate, and preferably at a location underneath the membrane, i.e. underneath the cavity.

In a preferred embodiment, the stress sensor is arranged in a plane parallel to a plane of the sensitive element, having a small vertical offset to the plane of the sensitive element. Preferably, the stress sensor is arranged in such plane underneath or above the sensitive element, and at a position in such plane corresponding to a center location of the sensitive element. For example, in case of the sensitive element being a membrane extending in x-y dimension with x coinciding with a longitudinal extension of the sensor chip and y coinciding with its lateral extension, the stress sensor may be located in the substrate underneath or above the membrane at the x-y coordinates that represent the center of the membrane.

In case the stress sensor comprises multiple stress sensing elements for sensing the same component of stress, e.g. tension or compression stress in a given orientation, wherein each stress sensing element individually provides a stress signal, such stress sensing elements may be arranged distributed, and preferably be arranged symmetrically with respect to a symmetry axis of the sensitive element, such as the membrane. In case of such arrangement, a compensation of the sensor signal may be dependent on one or more of an addition and a subtraction of the various stress signals supplied by the stress sensing elements. For example, a look-up table may provide stress compensated sensor signal values dependent on a sensor signal value and dependent on a value representing a subtraction of two stress signal values of such distributed stress sensing elements.

However, in a different embodiment, the stress sensor comprises at least two stress sensing elements measuring different components of stress, e.g. a first stress sensing element arranged for measuring tension and compression stress, and a second stress sensing element arranged for measuring shear stress. A look-up table may provide stress compensated sensor signal values dependent on the input values of the two corresponding stress signals.

In a different embodiment, the stress sensor, or its stress sensitive elements, are arranged with respect to locations of entrance of anticipated stress. Such locations may, for example be the location of the electrical contacts of the sensor chip, such as solder balls or bumps. Under the assumption, that these locations are all arranged in a common x-y plane, the stress sensor may preferably be arranged at a location representing a geometric center between the electrical contacts.

In another embodiment, stress sensitive elements of the stress sensor are arranged on an axis that is in parallel or orthogonal to a symmetry axis of the substrate.

Summarizing, a stress component in the sensor signal is electrically compensated for. The compensation applies dependent on a stress signal supplied by a stress sensor.

Although a compensation of the sensor signal is suggested, mechanical means may be provided in addition for reducing the propagation of stress towards the sensitive element.

The stress sensor may take different embodiments. Preferably, the stress sensor comprises a resistive element that follows the piezoresistive effect. Here, a resistance of the resistive element changes in response to stress applied. Typically, such resistive element is operated at a fixed bias current or voltage. Hence, it is preferred that at least one stress sensing element in form of a resistive element is provided in the sensor chip, and preferably in the substrate. When the resistive element is realized in semiconductor materials, it was found that with a p-type resistive element a high sensitivity can be achieved in a first orientation and with an n-type resistive element a high sensitivity can be achieved in a second orientation which is different to the first orientation.

Hence, a relative longitudinal change in resistivity $\rho/\Delta\rho$ of a p-type resistive element is proportional to $\sigma_{x'x'} - \sigma_{y'y'}$ with $\sigma$ representing stress and x' and y' representing the orientation of the stress component sensed, with x' and y' indicating the coordinate system of a primed silicon wafer defined on a standard <100> CMOS wafer, specifically with x' = [110] und y' = [$\overline{1}$10], and with x'x' referring to stress normal to a surface, i.e. tension or compression stress in x'-direction. Hence, with a p-type resistive element a difference of normal stresses in x' and y' direction can be sensed.

A relative longitudinal change in resistivity $\rho/\Delta\rho$ of an n-type resistive element instead is proportional to $\sigma_{x'y'}$ such that shear stress in the x'-y' plane is measured. Here, x'y' refers to shear stress in the x'-y' plane.

It is preferred that the longitudinal extension of the resistive element - assuming that the longitudinal extension exceeds its transversal extension - coincides with the orientation in the substrate the material of the resistive element is in particular sensitive to stress. Hence, it is preferred to align the p-type resistive element - if any - in x' or y' orientation, and in case of multiple p-type resistive elements to align each of those in either x' or y' orientation. Accordingly, it is preferred to align the n-type resistive element - if any - in x or y orientation, and in case of multiple n-type resistive elements to align each of those in either x or y orientation, wherein x and y refer to the crystalline structure of an unprimed substrate, and x', y' to the corresponding single primed substrate..

In a very preferred embodiment, a MOSFET (Metal Oxide Semiconductor Field Effect Transistor) is integrated into the substrate, e.g. by means of CMOS processing techniques, and serves as stress sensing element. A channel of the MOSFET between drain and source may represent an inversion layer piezoresistive element. Such devices are also referred to as piezo-FETs. In one embodiment, a p-channel MOSFET is comprised in the stress sensor as a first resistive element, and an n-channel MOSFET is comprised as a second resistive element. Accordingly, two stress signals are provided, each representing stress in a different stress orientation.

For compensating temperature effects, it is preferred to provide a Wheatstone bridge in the substrate comprising four stress sensing elements, and in particular four resistive elements, which Wheatstone bridge is supplied with a constant bias current or voltage, and a stress signal indicative of the stress dependent resistance of the resistive elements is a differential voltage output of the Wheatstone bridge, which is proportional to the relative longitudinal change in resistivity $\rho/\Delta\rho$ of the resistive elements.

In particular, it is preferred that a first Wheatstone bridge is provided comprising four first resistive elements, such as four p-channel MOSFETs, and a second Wheatstone bridge is provided comprising four second resistive elements, such as four n-channel MOSFETs. Hence, two stress signals are provided, each representing stress in a different stress orientation.

In case of the sensor arrangement comprising a pressure sensor chip for measuring pressure, and in particular for measuring absolute pressure, the pressure sensor chip comprises a deformable membrane providing a separation between a cavity and a port open to the outside of the sensor. The cavity is formed in a cap which is attached to a base substrate such that the deformable membrane faces the base substrate and such that a gap is provided between the deformable membrane and the base substrate. The cap preferably further contains circuitry, and in a preferred embodiment contains the compensator. A deformation of the deformable membrane is converted by suitable sensing means into a signal that is supplied to and processed by the circuitry in the cap.

The base substrate preferably contains a support portion to which the cap is attached. A contact portion of the base substrate is provided for electrically connecting the pressure sensor chip to the outside world. The support portion is suspended from the contact portion by one or more suspension elements. In this arrangement, the deformable membrane as element sensitive to stress is mechanically decoupled to some extent from the contact portion of the first substrate via which stress may be induced from an external carrier, or during mounting of the pressure sensor to an external carrier given that the contact portion preferably is the only portion via which the pressure sensor is electrically and mechanically connected to the outside. Any propagation of stress still migrating the substrate may be sensed by the stress sensor and be electrically compensated for by generating the stress compensated sensor signal subject to the sensor signal and subject to the stress signal of the stress sensor.

In a preferred embodiment, the cap comprises the substrate. Preferably, the substrate is a semiconductor substrate, such as a silicon substrate. Hence, the substrate may, for example, contain a bulk material made from silicon and various layers stacked on the bulk material such as one or more of metal layers, insulation layers and passivation layers. It is preferred, that the circuitry is integrated into the substrate. And it is preferred that the cavity is formed solely in the layer stack of the substrate and does not reach into the bulk material. In a preferred embodiment, the deflectable membrane is built from another substrate, which is attached to the top layer of the substrate. The other substrate may, for example, be an SOI (Silicon On Insulator) substrate, wherein specifically the deflectable membrane may be built from a silicon layer of the SOI substrate while an insulation layer and bulk material of the SOI substrate are removed during processing.

In the base substrate, the contact and the support portion are preferably built by applying one or more grooves vertically through the base substrate. By way of manufacturing the one or more grooves, one or more small portions of the base substrate remain for mechanically linking the support portion to the contact portion. This / these small portion/s act as suspension element/s for suspending the support portion from the contact portion. Preferably, the one or more grooves are arranged vertically in the base substrate, i.e. orthogonal to a plane extension of the first substrate. The suspension element/s may contain ridges, e.g. four ridges that hold the support portion. Preferably, each suspension element is formed integrally with the support portion and the contact portion given that in a preferred embodiment the support portion, the contact portion and the one or more suspension elements are built from the base substrate. In a preferred embodiment, the suspension elements do not represent the shortest path between the contact portion and the support portion but do have a shape that allows one or more of a deflection or a rotation of the support portion relative to the contact portion, e.g. a deflection in at least one direction of the plane of the first substrate. In such way, translational and / or rotational forces applied to the support portion via the cap may be dampened without damaging the suspension elements. The suspension elements may contain spring portions for this purpose. The one or more suspension elements preferably act as components of reduced stiffness for reducing stress that otherwise migrates to the cap. The one or more grooves to a large extent decouple the cap from the contact portion of the base substrate and preferably surround the contact portion except for the one or more suspension elements.

However, in a different embodiment, the base substrate may not be prepared by grooves and may not be separated into a contact and a support portion, but be a suspension-free base substrate. In a further embodiment, the base substrate may not even be required, and the cap as described above may represent the pressure sensor chip, which may be electrically contacted by means of bond wires or other means from a front side of the substrate, or from its back side, preferably containing vias through the substrate.

In terms of manufacturing, it is preferred that circuitry if any and the stress sensor are prefabricated into the substrate, and a cavity is manufactured therein, e.g. by etching. In the following, the other substrate is mounted to the substrate thereby covering the cavity in the substrate to build the deformable membrane. In case of a base substrate, the cap formed by the substrate and the membrane is assembled to a support portion of the base substrate with the deflectable membrane facing the base substrate. Spacer elements may be provided for mounting the deformable membrane distant from a surface of the base substrate in order to provide a gap between the deformable membrane and the base substrate. In this case, one or more grooves are manufactured into the base substrate around a contact portion which serves for electrically connecting the pressure sensor to an external device. As a result of manufacturing the one or more grooves, the support portion suspends from the contact portion by means of suspension elements.

A total height of the pressure sensor chip may preferably be between 350 to 500 microns. It is preferred that the circuitry if any is fabricated in the substrate by a CMOS process following well-known steps.

The described embodiments similarly pertain to the sensor arrangement and to the method. Synergetic effects may arise from different combinations of the embodiments although they might not be described in detail.

Other advantageous embodiments are listed in the dependent claims as well as in the description below.

Brief Description of the Drawings

Embodiments of the present invention, aspects and advantages will become apparent from the following detailed description thereof. Such description makes reference to the annexed drawings, wherein the figures show:

Fig. 1 a block diagram of a sensor arrangement according to an embodiment of the present invention;
Fig. 2 [not claimed] a block diagram of a sensor arrangement;
Fig. 3 a schematic sectional view of a pressure sensor arrangement in accordance with an embodiment of the present invention;
Fig. 4 a cross section of a substrate comprising a stress sensor as used in a sensor arrangement according to an embodiment of the present invention;
Fig. 5 a schematic top view on a stress sensor as used in a sensor chip according to an embodiment of the present invention,
Fig. 6 and Fig. 7 each a schematic top view on a stress sensor as used in a sensor chip according to an embodiment of the present invention;
Fig. 8 schematic transparent top views on different sensor chips, each according to an embodiment of the present invention.

DETAILED DESCRIPTION

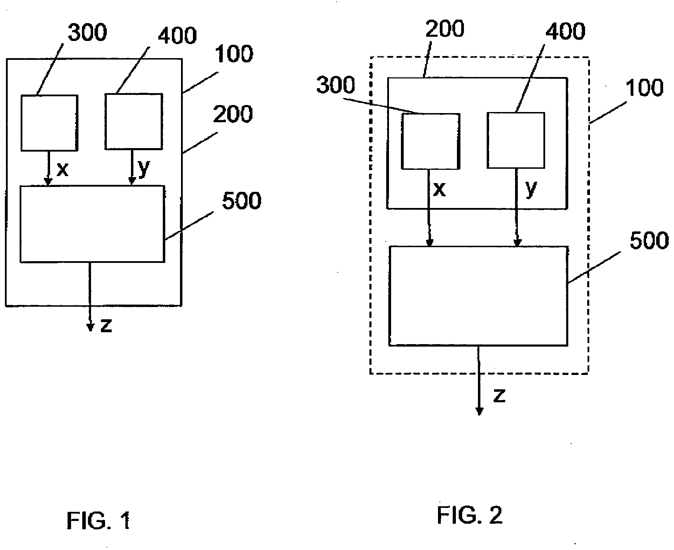

FIG. 1 illustrates a block diagram of a sensor arrangement according to an embodiment of the present invention. The sensor arrangement 100 comprises a sensor chip 200. Basically, all relevant elements are integrated in the present sensor chip 200 in this embodiment. Hence, the sensor chip 200 comprises a sensor 300 integrated thereto which sensor 300 is sensitive to a variable to be measured. The sensor 300 supplies a corresponding sensor signal x. In addition, a stress sensor 400 is integrated in the sensor chip 200, which stress sensor 400 is sensitive to stress in the sensor chip 200. The stress sensor 400 supplies a stress signal y indicative of stress measured in the sensor chip 200. A compensator 500 is integrated in the sensor chip 200 which compensator 500 is configured to determine a stress compensated sensor signal z dependent on the sensor signal x and dependent on the stress signal y.

FIG. 2 [not claimed] illustrates a block diagram of a sensor arrangement according to another embodiment of the present invention. The same elements of the sensor arrangement are referred to by the same reference signs as used in FIG. 1. In contrast to the embodiment of FIG. 1, the present sensor arrangement 100 includes a two-chip approach with the sensor chip 200 containing the sensor 300 and the stress sensor 400, and with the compensator 500 being embodied in a hardware unit different from the sensor chip 200, e.g. in a different semiconductor chip that is electrically connected to the sensor chip 200 as is shown in FIG. 2. Hence, a calculation of the stress

compensated sensor signal z is accomplished remote from the sensor chip 200.

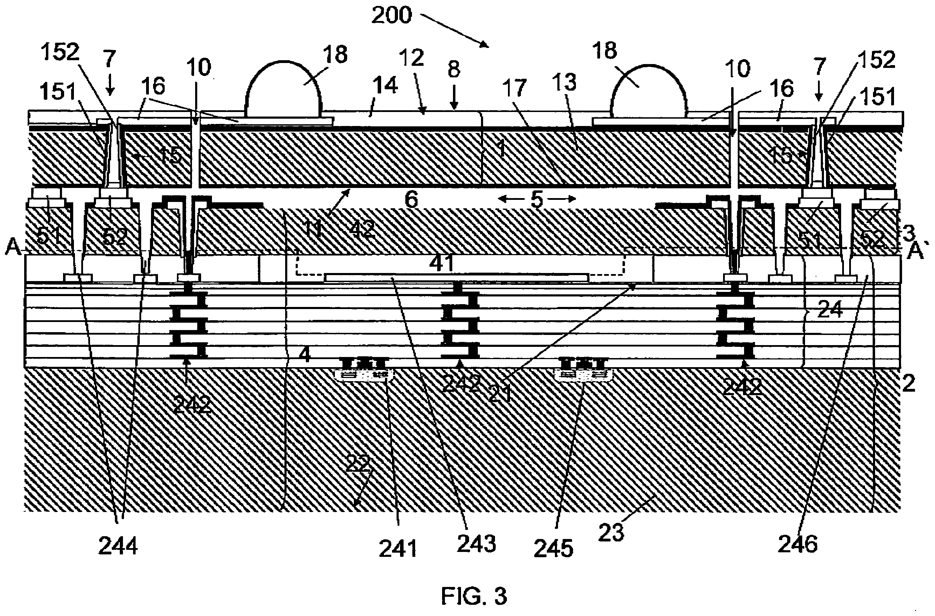

FIG. 3 shows a schematic sectional view of a sensor chip 200 for sensing pressure, in accordance with an embodiment of the present invention, and preferably in accordance with the embodiment illustrated in FIG. 1. The sensor chip 200 as shown is flipped with its solder balls 18 showing upwards while the sensor chip 200 will be mounted to a carrier with its solder balls 18 sitting on the carrier.

The sensor chip 200 includes a base substrate 1 and a cap 4 for the base substrate 1. The cap 4 preferably is made from a substrate 2 and another substrate 3. The substrate 2 preferably is a semiconductor substrate, preferably a silicon substrate, and has a front side 21 and a backside 22. The substrate 2 contains a bulk material 23 of, e.g. silicon, and a stack of layers 24 on the bulk material 23. These layers 24 may be arranged for CMOS processing of the second substrate 2, and as such may also be denoted as CMOS layers or material layers. Specifically, the layers 24 can include for example a plurality of SiO2 layers, metal or polysilicon layers. A top layer 246 of the stack of layers 24 may be a dielectric layer of silicon oxide and/or silicon nitride protecting the structures below it and sealing the cavity above.

In the cap 4, a cavity 41 is formed by omitting or removing material from one or more of the layers 24, presently the top layer 246. The cavity 41 is closed by a deflectable membrane 42. The membrane 42 is sufficiently thin such that it deforms depending on a pressure difference between a pressure at the top of the membrane 42 and below it. A metal layer 243 may be used as an electrode, and as such may be arranged at the bottom of the cavity 41. The membrane 42 preferably is formed by a doped, conducting silicon layer, is arranged as a sealing lid over the cavity 41, and may be used as another electrode for which reason the deformable membrane 42 may contain electrically conducting material. Hence upon a change in pressure the membrane 42 deflects and as such a distance between the two electrodes changes which results in a change of the capacitance between the two electrodes.

In the present example, the deformable membrane 42 is built from another substrate 3. The other substrate 3 as shown in Fig. 1 may be the remainder of an SOI substrate, specifically its device layer after some manufacturing steps. The other substrate 3 not only may contribute to the deformable membrane 42. The other substrate 3 may contain contact windows 244 reaching through which may also reach into one or more of the layers 24.

Corresponding signals may be transmitted from the electrodes, i.e. the deformable membrane 42 and the metal layer 243 via electrical paths 242 to a circuitry integrated in the substrate 2 to be described later on. Signals processed by the circuitry 241 may be supplied to the base substrate 1.

The base substrate 1 may be a semiconductor substrate, e.g. a silicon substrate, or a glass substrate, for example, with a front side 11 and a back side 12. The semiconductor base substrate 1 includes bulk material 13 such as silicon, and one or more layers 14, such as an oxide layer on the bulk material 13. The one or more layers 14 may further include for example a plurality of SiO2 layers, metal or polysilicon layers.

The base substrate 1 contains vias 15 reaching vertically through the base substrate 1. Those vias 15 provide for an electrical connection from the back side 12 of the base substrate 1 to its front side 11. Those vias 15 are manufactured by etching or drilling holes into the first substrate 1 from its back side 12, by applying an oxide 151 to the hole, and by applying conducting material 152 to the oxide 151. At the front side 11 of the base substrate 1, the vias 15 are electrically connected to contact pads 16 on an oxide layer 17, which contact pads 16 serve as support for solder balls 18 or other contact means for electrically connecting the pressure sensor to the outside world, i.e. to another device. Alternative to the vias 15 and the solder balls 18, there may be other ways of interconnecting the sensor chip 200 to the outside world, e.g. by means of wire bonds, bond pads or conducting structures that lead from the front side 11 of the base substrate 1 along its sides to the backside 12. The electrical connection to the outside world may also be implemented via one or more of a Land Grid Array, a Pin Grid Array, or a leadframe.

The assembly containing the substrate 2 and the other substrate 3 is attached to the front side 11 of the base substrate 1. The attachment may include bonding or other fusion techniques. In the present example, spacer elements 5 are provided between the other substrate 3 and the base substrate 1. The spacer elements 5 may have different functions: On the one hand, the spacer elements 5 provide for a gap 6 between the deformable membrane 42 and the base substrate 1 which is required for supplying the pressure medium to the membrane 42. On the other hand, some of the spacer elements 5, but not necessarily all may be electrically conductive for connecting contact windows 244 to the base substrate 1. Other or the same spacer elements 5 may provide mechanical stability for the stacking of substrates 1, 3 and / or may provide mechanical protection to the inside of the sensor chip 200, and specifically to the membrane 42. For this purpose, it may be preferred, that a spacer element 51 is arranged in form of a ring at the edges of the substrates 1,3 providing mechanical stability, protection as well as an electrical connection, while spacer elements 52 are rather pillar-like and provide electrical connections.

The base substrate 1 contains a support portion 7 and a contact portion 8. Suspension elements not shown in the present illustration are provided for suspending the support portion 7 from the contact portion 8. The support portion 7 preferably encircles the contact portion 8 in a plane of the first substrate 1. The contact portion 8 is separated from the support portion 7 by one or more grooves 10. Owed to the manufacturing of the contact portion 8 and the support portion 7 from the common base substrate 1, both portions may include bulk material 13 from the base substrate 1.

The cap 4 preferably is exclusively attached to the support portion 7 of the base substrate 1 via the spacer elements 5. On the other hand, it is preferred that it is solely the contact portion 8 that provides a mechanical and electrical contact to the outside world. Hence, the portion of the sensor chip 200 via which mechanical stress is induced, i.e. the contact portion 8 is to some extent mechanically decoupled from the rest of the sensor chip 200 and specifically from the deformable membrane 42 by way of the suspension elements, and therefore significantly reduces stress transferred to the membrane 42.

A port for conducting a medium to the deformable membrane 42 in the present example encompasses the grooves 10 and the gap 6, or at least parts of. The overall height of the pressure sensor in the present example is about 400 μm.

As is indicated in FIG. 3, the bulk material 23 of substrate 2 may contain doped regions within the silicon such as indicated by the reference sign 241 which shall collectively represent a stress sensor 400 such as shown in FIG. 1 or FIG. 2. Other doped regions within the silicon such as indicated by the reference sign 245 shall collectively represent integrated circuitry integrated into the substrate 2, such as processing circuitry, preferably including the compensator 500 of FIG. 1, for example. This processing circuitry preferably includes active circuitry, such as amplifiers, A/D converters or other analog and/or digital signal processing units. In the present example, it is assumed that the circuitry is integrated on the front side 21 of the substrate 2 by means of CMOS processing.

In a preferred embodiment, the stress compensated sensor signal is transferred via one or more of electrical paths 242 in the stack of layers 24 and via one or more of the contact windows 244 to one or more of the spacer elements 5 and from there via the vias 15 in the base substrate 1 to the contact pads 16 and the solder balls 18.

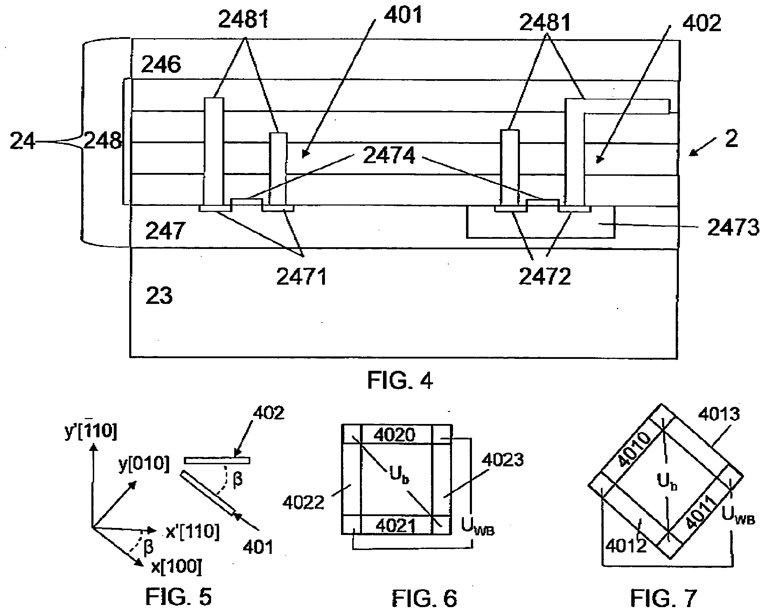

Fig. 4 shows a schematic cross section of a substrate 2 comprising a stress sensor as used in a sensor arrangement 100 according to an embodiment of the present invention. This cross section may be considered as a cut out of the sensor chip 200 of FIG. 3. Again, the silicon substrate 2 comprises silicon bulk material 23 and a stack of layers 24 arranged thereon. The bulk material 23 may be a highly p-doped silicon bulk material 23. A low p-doped layer 247 is arranged on the bulk material 23. On top of the layer 247 are layers 248 of insulating material and metal while on the very top a passivation layer 246 is provided. An NMOS transistor 401 and a PMOS transistor 402 are integrated into the substrate 2. For the NMOS-transistor 401, source and drain are manufactured each by n+-diffusions in layer 247. For the PMOS-transistor 402, source and drain are manufactured each by p+-diffusions in an n-well 2473 in layer 247. Gates 2474 are applied for each NMOS and PMOS transistor 401 and 402. Electrical contacts 2481 are provided in an insulated manner in form of vias through the layers 48.

The NMOS and PMOS transistors 401 and 402 each represent a resistive element 401 and 402 integrated in the substrate 2 showing a piezoresistive effect when being exposed to stress in plane, i.e. in the plane defined by a length and width of the substrate 2, and finally the sensor chip 200. The channel of each NMOS and PMOS transistor 401 and 402 represents the resistive element that shows a voltage drop across drain and source dependent on stress while applying current controlled by the gate 2474. Multiple channels may contribute to a resistive element, if desired.

Fig. 5 illustrates a schematic top view on two resistive elements, wherein specifically the resistive channels shall be represented as rectangles of NMOS and PMOS transistors 401 and 402. Here, the two NMOS and PMOS transistors 401 and 402 are arranged inclined with respect to each other. While the NMOS transistor 401 is arranged in parallel to an x-direction, the PMOS transistor 402 is arranged in parallel to the x'-direction. Hence, NMOS transistor 401 and PMOS transistor 402 are rotated by $\beta = 45°$ with respect to each other. The coordinates indicate the orientations of the crystalline structure of the substrate, wherein x and y refer to the crystalline structure of the unprimed substrate 2, and x', y' to the corresponding single primed CMOS substrate 2.

Given that an n-type resistive element has a high sensitivity in x and y orientation and a p-type resistive element has a high sensitivity in x' and y' orientation, it is preferred to align the longitudinal extension of the resistive part of the NMOS transistor 401 in parallel to the x or y axis, while it is preferred to align the longitudinal extension of the resistive part of the PMOS transistor 402 in parallel to the x' or y' axis.

Fig. 6 illustrates a schematic top view on multiple resistive elements 4020, 4021, 4022 and 4022 arranged in a Wheatstone bridge with having a bias voltage $U_b$ applied, and measuring a bridge voltage $U_{WB}$ that depends on stress applied to the plane the resistive elements are arranged in. It is preferred, that each of the resistive elements in this example represents a p-type resistive element, and in particular a p-channel MOSFET. As can be seen from FIG. 6 - to which the same coordinates are to be applied as drawn in FIG. 5 - the p-type resistive elements are arranged in parallel to the x' and y' orientation. Hence, a tension and compression stress with respect to x' and y' orientation can be efficiently measured by the stress sensor of FIG.' 6.

Fig. 7 illustrates a schematic top view on multiple resistive elements 4010, 4011, 4012 and 4012 arranged in a Wheatstone bridge with having a bias voltage $U_b$ applied, and measuring a bridge voltage $U_{WB}$ that depends on the normal stress applied to the plane the resistive elements are arranged in. It is preferred, that each of the resistive elements in this example represents an n-type resistive element, and in particular an n-channel MOSFET. As can be seen from FIG. 7 - to which the same coordinates are applied as indicated in FIG. 5 - the n-type resistive elements are arranged in parallel to the x and y orientation. Hence, a shear stress can be efficiently measured by the stress sensor of FIG. 7.

It is noted, that in particular a stress sensor comprising the resistive elements 4010, 4011, 4012 4022 of FIG. 6 and 4020, 4021, 4022, 4022 of FIG. 7 can be arranged in the same way next to each other for simultaneously measuring normal and shear stress in the plane of the substrate 2.

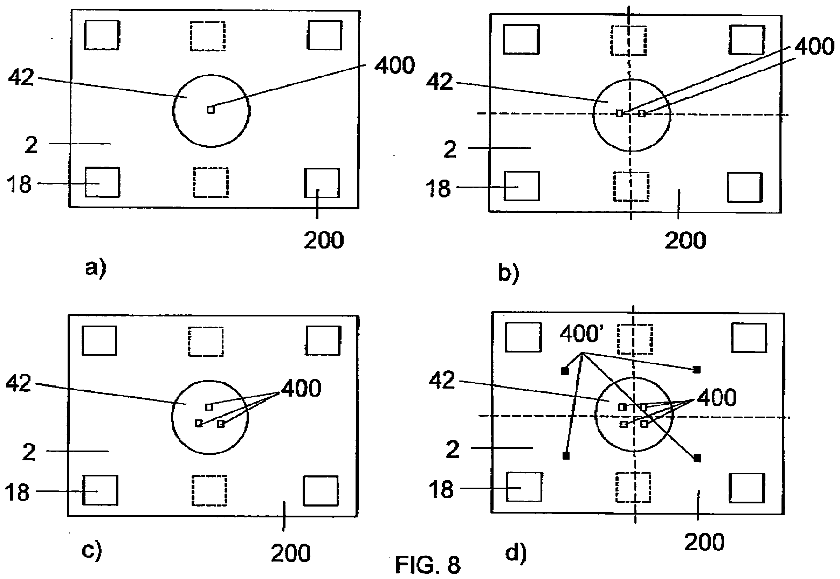

Fig. 8 illustrates schematic transparent top views on various sensor chips 200 according to embodiments of the present invention. The substrates 2 generally appear to have a rectangular cross section. Four, or optionally six electrical contacts in form or solder balls 18 are provided for contacting the sensor chip. Presently, a deformable membrane 42 is arranged in the center of the sensor chip 200.

In diagram 8a), the stress sensor 400 in form of a single stress sensor element is arranged in the center of the membrane 42, which at the same time is the geometrical center between the solder balls 18. Hence, a mechanical impact on one of the solder balls has the same stress effect at the location of the stress sensor 400 as the same impact on a different solder ball 18. Hence, the stress signal, and in particular its magnitude does not depend on the location the stress originates from.

Diagram 8b) illustrates two stress sensitive elements defining the stress sensor 400, arranged mirrored along a symmetry axis of the sensor chip 200.

In diagram 8c) three stress sensitive elements defining the stress sensor 400 are arranged in a triangle with a geometrical center coinciding with the center of the membrane 42 and the center between the solder balls 18.

In diagram 8d) four stress sensitive elements define the stress sensor 400, and are arranged in a rectangle with a geometrical center coinciding with the center of the membrane 42 and the center between the solder balls 18, or in other words, being mirrored along both symmetry axis of the sensor chip 200. Each stress sensing element indicated by a small rectangle in Fig. 8 may also contain one or more of the arrangements of Fig. 6 and Fig. 7, also in combination.

For all the above arrangements, and in particular for the arrangements of stress sensing elements as introduced in diagrams 8b), 8c) and 8d), the stress sensing elements may alternatively each be arranged outside the area of the projected sensitive element, i.e. the membrane 42 in this case. Such example is shown in diagram 8d). Hence, stress sensing elements, which in this case are referred to by filled rectangles collectively named stress sensor 400', may be arranged closer to the solder balls 18. Again, a symmetrical arrangement is preferred.

It should be noted, that the present invention is neither limited to embodiments where the sensor is a pressure sensor nor to capacitive sensing means as described. Rather, it can be used with any type of sensor that uses a sensitive element or sensing means exposed to mechanical stress, and irrespective of the kind of sensing means used.

While above there are shown and described embodiments of the invention, it is to be understood that the invention is not limited thereto but may be otherwise variously embodied and practiced within the scope of the following claims.

**Claims**

1. A sensor arrangement (100), comprising a sensor chip (200) comprising

   - a sensor (300) sensitive to a variable to be measured, and providing a sensor signal (x),
   - a stress sensor (400) sensitive to stress in the sensor chip (200), and providing a stress signal (y), and
   - an integrated circuitry, wherein the integrated circuitry includes a compensator (500), the compensator (500) configured to determine a stress compensated sensor signal (z) dependent on the sensor signal (x) and the stress signal (y),

   wherein the sensor chip (200) comprises electrical contacts (16, 18) for contacting the sensor chip (200) from the outside, and
   wherein the stress sensor (400) is arranged at a location exposed to a mechanical stress induced or transmitted via the electrical contacts (16, 18) or another mechanical connection.

2. The sensor arrangement (100) of claim 1,
   wherein the sensor is sensitive to one of pressure, flow of a gas, flow of a liquid, humidity, gas or temperature.

3. The sensor arrangement (100) of claim 1 or claim 2,
   wherein the sensor (300) is a pressure sensor, which includes a membrane (42) deflectable in response to pressure, and includes sensing means for detecting a deflection of the membrane (42) and providing the sensor signal (x) indicative thereof, which sensing means are different from the stress sensor (400), and
   in particular wherein the sensing means includes an electrode formed by or coupled with the deflectable membrane (42) and another stationary electrode (243) for sensing a capacitance between the electrode and the other electrode (243).

4. The sensor arrangement (100) of any of the preceding claims,
   wherein the sensor chip (200) comprises a substrate (2), in particular a silicon substrate,
   wherein the stress sensor (400) is embodied in the substrate (2).

5. The sensor arrangement (100) of claim 4,
   wherein the substrate includes bulk material (23), in particular silicon, and a stack of layers (24) arranged thereon, in particular a stack of CMOS layers, and wherein the stress sensor (400) is embodied in one or more of the bulk material (23) and the stack of layers (24), and in particular wherein the bulk material (23) and the stack of layers (24) are prepared for contributing to the integrated circuitry.

6. The sensor arrangement (100) of any of the preceding claims,
   wherein the stress sensor (400) comprises at least one piezoresistive element (401, 402) integrated in the sensor chip (200) a change in resistivity of which at least one piezoresistive element (401, 402) is indicative of stress induced.

7. The sensor arrangement of claim 6,
   wherein the stress sensor (400) comprises at least one first piezoresistive element (401) integrated in the sensor chip (200), in particular a p-channel MOSFET (401), and at least one second piezoresistive element (402) being different from the first piezoresistive element (401), in particular an n-channel MOSFET (402),

in particular wherein four first piezoresistive elements (4010, 4011, 4012, 4013) are arranged in a first Wheatstone bridge,

in particular wherein four second piezoresistive (4020, 4021, 4022, 4023) elements are arranged in a second Wheatstone bridge.

8. The sensor arrangement of claim 6 or claim 7, wherein at least one of the first piezoresistive element/s (401) is aligned in a first orientation (x', y') in a plane defined by the sensor chip (200),

wherein at least one of the second piezoresistive element/s (402) is aligned in a second orientation (x, y) in the plane defined by the sensor chip (200) different to the first orientation (x', y'),

in particular wherein the p-channel of at least one of the p-channel MOSFET/s (401) is aligned in the first orientation (x', y'),

in particular wherein the n-channel of the at least one of the n-channel MOSFET/s (402) is aligned in the second orientation (x, y) rotated by β with respect to the first orientation (x', y'),

in particular wherein β = 45 °.

9. The sensor arrangement (100) of claim 2, wherein the sensor chip (200) comprises a base substrate (1),

wherein the sensor chip (200) comprises a cavity (41) between the deflectable membrane (42) and the substrate (2),

wherein the deflectable membrane (42) separates the cavity (41) and a port open to an outside of the sensor chip (200),

wherein the substrate (2) is attached to the base substrate (1) with the deflectable membrane (42) facing the base substrate (1) and with a gap (6) between the deflectable membrane (42) and the base substrate (1) contributing to the port.

10. The sensor arrangement (100) of claim 9, wherein the base substrate (1) comprises a support portion (7) the substrate (2) is attached to, a contact portion (8) comprising electrical contacts (16, 18) for electrically contacting the sensor chip (200) from the outside, and one or more suspension elements for suspending the support portion (7) from the contact portion (8),

in particular wherein the base substrate (1) has a plane extension and wherein the support portion (7) encircles the contact portion (8) in the plane of the base substrate (1),

in particular wherein the support portion (7) is separated from the contact portion (8) except for the one or more suspension elements by one or more grooves (10) in the base substrate (1),

in particular wherein each suspension element contains a ridge between the support portion (7) and the contact portion (8),

in particular wherein one or more of the suspension elements (9) includes at least one electrically conducting path for electrically connecting the support portion (7) to the contact portion (8).

11. The sensor arrangement (100) of claim 10, wherein the base substrate (1) has a front side (11) facing the deformable membrane (42), a backside (12) containing the electrical contacts (16, 18), and vi-as (15) for electrically connecting the front side (11) of the base substrate (1) to its backside (12),

in particular wherein the vias (15) are arranged in the support portion (7),

in particular wherein the vias (15) are electrically connected to the contact portion (7) through one or more of the suspension elements (9).

12. The sensor arrangement (100) of claim 4 and any of the preceding claims 9 to 11, wherein the cavity (41) is a recess exclusively arranged in one or more of the stack of layers (24), and wherein the deformable membrane (42) is made from another substrate (3) attached to the stack of layers (24) of the substrate (2),

comprising spacer elements (5) between the base substrate (1) and the substrate (3,2) or the other substrate (3) for building the gap (6), and

wherein at least some of the spacer elements (5) are used as electrical connections between the cap (4) and the first substrate (1).

13. Method for operating a sensor arrangement (100) comprising a sensor chip (200), wherein the sensor chip (200) comprises a sensor (300), a stress sensor (400), and an integrated circuitry, the integrated circuitry including the compensator (500),

the method comprising

sensing a variable by the sensor (300) and providing a corresponding sensor signal (x),

sensing stress in the sensor chip (200) by the stress sensor (400) and providing a corresponding stress signal (y), and

determining a stress compensated sensor signal (z) by the compensator (500) dependent on the sensor signal (x) and the stress signal (y),

wherein the sensor chip (200) comprises electrical contacts (16, 18) for contacting the sensor chip (200) from the outside, and

wherein the stress sensor (400) is arranged at a location exposed to a mechanical stress induced or transmitted via the electrical contacts (16, 18) or another mechanical connection.

**14.** Computer program element, comprising computer product code means for performing a method when executed on a processing unit comprised in a compensator (500) of a sensor chip (200), comprising receiving a sensor signal (x) representing a variable sensed by a sensor (300) of the sensor chip (200), receiving a stress signal (y) sensed by a stress sensor (400) arranged in the sensor chip (200), and determining a stress compensated sensor signal (z) dependent on the sensor signal (x) and the stress signal (y),

wherein the sensor chip (200) comprises electrical contacts (16, 18) for contacting the sensor chip (200) from the outside, and

wherein the stress sensor (400) is arranged at a location exposed to a mechanical stress induced or transmitted via the electrical contacts (16, 18) or another mechanical connection.

**Patentansprüche**

**1.** Eine Sensoranordnung (100), umfassend einen Sensorchip (200), der Folgendes umfasst

- einen Sensor (300), der auf eine zu messende Variable empfindlich reagiert und ein Sensorsignal (x) bereitstellt,
- einen Spannungssensor (400), der empfindlich auf Spannungen im Sensorchip (200) reagiert und ein Spannungssignal (y) liefert, und
- eine integrierte Schaltung, wobei die integrierte Schaltung einen Kompensator (500) beinhaltet, wobei der Kompensator (500) konfiguriert ist, um ein spannungskompensiertes Sensorsignal (z) abhängig vom Sensorsignal (x) und dem Spannungssignal (y) zu bestimmen,

wobei der Sensorchip (200) elektrische Kontakte (16, 18) zum Kontaktieren des Sensorchips (200) von außen umfasst, und

wobei der Spannungssensor (400) an einer Stelle angeordnet ist, die einer mechanischen Spannung ausgesetzt ist, die über die elektrischen Kontakte (16, 18) oder eine andere mechanische Verbindung induziert oder übertragen wird.

**2.** Die Sensoranordnung (100) nach Anspruch 1, wobei der Sensor empfindlich ist gegenüber Druck, Durchfluss eines Gases, Durchfluss einer Flüssigkeit, Feuchtigkeit, Gas oder Temperatur.

**3.** Die Sensoranordnung (100) nach Anspruch 1 oder Anspruch 2, wobei der Sensor (300) ein Drucksensor ist, der eine Membran (42) beinhaltet, die in Bezug auf den Druck ablenkbar ist, und eine Erfassungseinrichtung zum Detektieren einer Ablenkung der Membran (42) und zum Bereitstellen des Sensorsignals (x), das dies anzeigt, beinhaltet, wobei sich die Erfassungseinrichtung von dem Spannungssensor (400) unterscheidet, und

insbesondere wobei die Erfassungseinrichtung eine Elektrode beinhaltet, die durch die verformbare Membran (42) und eine weitere stationäre Elektrode (243) zum Erfassen einer Kapazität zwischen der Elektrode und der anderen Elektrode (243) gebildet oder mit dieser gekoppelt ist.

**4.** Die Sensoranordnung (100) nach einem der vorangehenden Ansprüche, wobei der Sensorchip (200) ein Substrat (2), insbesondere ein Siliziumsubstrat, umfasst, wobei der Spannungssensor (400) im Substrat (2) ausgebildet ist.

**5.** Die Sensoranordnung (100) nach Anspruch 4, wobei das Substrat Schüttgut (23), insbesondere Silizium, und einen darauf angeordneten Stapel von Schichten (24), insbesondere einen Stapel von CMOS-Schichten, beinhaltet, und wobei der Spannungssensor (400) im Schüttgut (23), dem Stapel von Schichten (24) oder beiden verkörpert ist, und insbesondere wobei das Schüttgut (23) und der Stapel von Schichten (24) für einen Beitrag zur integrierten Schaltung vorbereitet sind.

**6.** Sensoranordnung (100 nach einem der vorangehenden Ansprüche, wobei der Spannungssensor (400) mindestens ein piezoresistives Element (401, 402) umfasst, das im Sensorchip (200) integriert ist, wobei eine Widerstandsänderung von diesem vom mindestens einen piezoresistiven Element (401, 402) auf eine Spannungsinduzierung hinweist.

**7.** Die Sensoranordnung nach Anspruch 6, wobei der Spannungssensor (400) mindestens ein erstes piezoresistives Element (401), das in den Sensorchip (200) integriert ist, insbesondere einen p-Kanal-MOSFET (401), und mindestens ein zweites piezoresistives Element (402) umfasst, das sich vom ersten piezoresistiven Element (401) unterscheidet, insbesondere einem n-Kanal-MOSFET (402),

insbesondere wobei vier erste piezoresistive Elemente (4010, 4011, 4012, 4013) in einer ersten Wheatstone-Brücke angeordnet sind,

insbesondere wobei vier zweite piezoresistive (4020, 4021, 4022, 4023) Elemente in einer zweiten Wheatstone-Brücke angeordnet sind.

**8.** Die Sensoranordnung nach Anspruch 6 oder Anspruch 7, wobei mindestens eines der ersten piezoresistiven Elemente (401) in einer ersten Ausrichtung (x', y') in einer durch den Sensorchip (200) definierten Ebene ausgerichtet ist,
wobei mindestens eines der zweiten piezoresistiven Elemente (402) in einer zweiten Ausrichtung (x, y) in der durch den Sensorchip (200) definierten Ebene ausgerichtet ist, die sich von der ersten Ausrichtung (x', y') unterscheidet,
insbesondere wobei der p-Kanal von mindestens einem der p-Kanal-MOSFET/s (401) in der ersten Ausrichtung (x', y') ausgerichtet ist,
insbesondere wobei der n-Kanal des mindestens einen der n-Kanal-MOSFET/s (402) in der zweiten Ausrichtung (x, y) ausgerichtet ist, die um β in Bezug auf die erste Ausrichtung (x', y') gedreht ist,
insbesondere wobei β = 45 °.

9. Die Sensoranordnung (100) nach Anspruch 2,
wobei der Sensorchip (200) ein Basissubstrat (1) umfasst,
wobei der Sensorchip (200) einen Hohlraum (41) zwischen der verformbaren Membran (42) und dem Substrat (2) umfasst,
wobei die verformbare Membran (42) den Hohlraum (41) und eine Öffnung, die zu einer Außenseite des Sensorchips (200) offen ist, trennt,
wobei das Substrat (2) am Basissubstrat (1) mit der dem Basissubstrat (1) zugewandten verformbaren Membran (42) und mit einem Spalt (6) zwischen der verformbaren Membran (42) und dem Basissubstrat (1), das zur Öffnung beiträgt, befestigt ist.

10. Die Sensoranordnung (100) nach Anspruch 9,
wobei das Basissubstrat (1) einen Trägerabschnitt (7), an dem das Substrat (2) befestigt ist, einen Kontaktabschnitt (8) mit elektrischen Kontakten (16, 18) zum elektrischen Kontaktieren des Sensorchips (200) von außen und ein oder mehrere Aufhängungselemente zum Aufhängen des Trägerabschnitts (7) am Kontaktabschnitt (8) umfasst,
insbesondere wobei das Basissubstrat (1) eine Ebenenverlängerung aufweist und wobei der Trägerabschnitt (7) den Kontaktabschnitt (8) in der Ebene des Basissubstrats (1) umgibt,
insbesondere wobei der Trägerabschnitt (7) vom Kontaktabschnitt (8) mit Ausnahme des einen oder der mehreren Aufhängungselemente durch eine oder mehrere Nuten (10) im Grundsubstrat (1) getrennt ist,
insbesondere wobei jedes Aufhängungselement einen Grat zwischen dem Trägerabschnitt (7) und dem Kontaktabschnitt (8) enthält,
insbesondere wobei eines oder mehrere der Aufhängungselemente (9) mindestens eine elektrisch leitende Bahn zum elektrischen Verbinden des Trägerabschnitts (7) mit dem Kontaktabschnitt (8) beinhaltet.

11. Die Sensoranordnung (100) nach Anspruch 10,

wobei das Basissubstrat (1) eine der verformbaren Membran (42) zugewandte Vorderseite (11), eine die elektrischen Kontakte (16, 18) enthaltende Rückseite (12) und Vias (15) zum elektrischen Verbinden der Vorderseite (11) des Basissubstrats (1) mit seiner Rückseite (12) aufweist,
insbesondere wobei die Vias (15) in dem Trägerabschnitt (7) in einem Bereich angeordnet sind,
insbesondere wobei die Vias (15) über eines oder mehrere der Aufhängeelemente (9) elektrisch mit dem Kontaktabschnitt (7) verbunden sind.

12. Die Sensoranordnung (100) nach Anspruch 4 und einem der vorangehenden Ansprüche 9 bis 11,
wobei der Hohlraum (41) eine Aussparung ist, die ausschließlich in einer oder mehreren der Schichtenstapel (24) angeordnet ist, und
wobei die verformbare Membran (42) aus einem anderen Substrat (3) hergestellt ist, das am Stapel von Schichten (24) des Substrats (2) befestigt ist,
umfassend Abstandhalterelemente (5) zwischen dem Basissubstrat (1) und dem Substrat (3, 2) oder dem anderen Substrat (3) zum Bilden des Spaltes (6), und
wobei mindestens einige der Abstandhalterelemente (5) als elektrische Verbindungen zwischen der Kappe (4) und dem ersten Substrat (1) verwendet werden.

13. Verfahren zum Betreiben einer Sensoranordnung (100), die einen Sensorchip (200) umfasst, wobei der Sensorchip (200) einen Sensor (300), einen Spannungssensor (400) und eine integrierte Schaltung umfasst, wobei die integrierte Schaltung den Kompensator (500) umfasst,
wobei das Verfahren umfasst
Erfassen einer Variablen durch den Sensor (300) und Bereitstellen eines entsprechenden Sensorsignals (x),
Erfassen von Spannung in dem Sensorchip (200) durch den Spannungssensor (400) und Bereitstellen eines entsprechenden Spannungssignals (y), und
Bestimmen eines spannungskompensierten Sensorsignals (z) durch den Kompensator (500) in Abhängigkeit vom Sensorsignal (x) und dem Spannungssignal (y),
wobei der Sensorchip (200) elektrische Kontakte (16, 18) zum Kontaktieren des Sensorchips (200) von außen umfasst, und
wobei der Spannungssensor (400) an einer Stelle angeordnet ist, die einer mechanischen Spannung ausgesetzt ist, die über die elektrischen Kontakte (16, 18) oder eine andere mechanische Verbindung induziert oder übertragen wird.

14. Computerprogrammelement, umfassend Computerproduktcodemittel zum Ausführen eines Verfahrens, wenn es auf einer Verarbeitungseinheit ausgeführt wird, die in einem Kompensator (500) eines Sensorchips (200) enthalten ist, umfassend

Empfangen eines Sensorsignals (x), das eine Variable darstellt, die von einem Sensor (300) des Sensorchips (200) erfasst wird,

Empfangen eines Spannungssignals (y), das vom Spannungssensor (400) erfasst wird, der in dem Sensorchip (200) angeordnet ist, und

Bestimmen eines spannungskompensierten Sensorsignals (z) in Abhängigkeit vom Sensorsignal (x) und dem Spannungssignal (y),

wobei der Sensorchip (200) elektrische Kontakte (16, 18) zum Kontaktieren des Sensorchips (200) von außen umfasst, und

wobei der Spannungssensor (400) an einer Stelle angeordnet ist, die einer mechanischen Spannung ausgesetzt ist, die über die elektrischen Kontakte (16, 18) oder eine andere mechanische Verbindung induziert oder übertragen wird.


## Revendications

1. Un agencement de capteur (100), comprenant une puce de capteur (200) comprenant

    - un capteur (300) sensible à une variable à mesurer, et fournissant un signal de capteur (x),
    - un capteur de contrainte (400) sensible à la contrainte dans la puce de capteur (200), et fournissant un signal de contrainte (y), et
    - un circuit intégré, le circuit intégré comprenant un compensateur (500), le compensateur (500) étant configuré pour déterminer un signal de capteur compensé en contrainte (z) en fonction du signal du capteur (x) et du signal de contrainte (y),

    la puce de capteur (200) comprenant des contacts électriques (16, 18) pour contacter la puce de capteur (200) de l'extérieur, et
    le capteur de contrainte (400) étant disposé à un emplacement exposé à une contrainte mécanique induite ou transmise par les contacts électriques (16, 18) ou une autre liaison mécanique.

2. L'agencement de capteur (100) selon la revendication 1,
    le capteur étant sensible à la pression, à l'écoulement d'un gaz, à l'écoulement d'un liquide, à l'humidité, au gaz ou à la température.

3. L'agencement de capteur (100) selon la revendication 1 ou la revendication 2,
    le capteur (300) étant un capteur de pression, qui comprend une membrane (42) pouvant être déviée en réponse à la pression, et qui comprend des moyens de détection pour détecter une déviation de la membrane (42) et fournir le signal du capteur (x) indiquant celle-ci, lesquels moyens de détection sont différents du capteur de contrainte (400), et en particulier le moyen de détection comprenant une électrode formée par ou couplée à la membrane déformable (42) et une autre électrode électrique fixe (243) pour détecter une capacité entre l'électrode électrique et l'autre électrode (243).

4. L'agencement de capteur (100) selon l'une quelconque des revendications précédentes,
    la puce de capteur (200) comprenant un substrat (2), en particulier un substrat en silicium,
    le capteur de contrainte (400) étant incorporé dans le substrat (2).

5. L'agencement de capteur (100) selon la revendication 4,
    le substrat comprenant un matériau en vrac (23), en particulier du silicium, et une pile de couches (24) disposée sur celui-ci, en particulier une pile de couches CMOS, et le capteur de contrainte (400) étant incorporé dans un ou plusieurs du matériau en vrac (23) et la pile de couches (24), et en particulier le matériau en vrac (23) et la pile des couches (24) étant préparés pour contribuer au montage de circuits intégrés.

6. L'agencement de capteur (100) selon l'une quelconque des revendications précédentes,
    le capteur de contrainte (400) comprenant au moins un élément piézorésistif (401, 402) intégré dans la puce de capteur (200) dont au moins un élément piézorésistif (401, 402) indique une contrainte induite.

7. L'agencement de capteur selon la revendication 6,
    le capteur de contrainte (400) comprenant au moins un premier élément piézorésistif (401) intégré dans la puce de capteur (200), en particulier un MOSFET à canal p (401), et au moins un deuxième élément piézorésistif (402) étant différent du premier élément piézorésistif (401), en particulier un MOSFET à canal n (402),
    en particulier quatre premiers éléments piézorésistifs (4010, 4011, 4012, 4013) étant disposés dans un premier pont de Wheatstone,
    en particulier quatre deuxièmes éléments piézorésistifs (4020, 4021, 4022, 4023) étant disposés dans un deuxième pont de Wheatstone.

8. L'agencement de capteur selon la revendication 6 ou 7,
    au moins un des premiers éléments piézorésistifs (401) étant aligné dans une première orientation (x', y') dans un plan défini par la puce capteur (200),
    au moins un des deuxièmes éléments piézorésistifs (402) étant aligné dans une deuxième orientation (x, y) dans le plan défini par la puce capteur (200) différente de la première orientation (x', y'),

en particulier le canal p d'au moins un des MOSFET/s (401) du canal p étant aligné dans la première orientation (x', y'),

en particulier le canal n d'au moins un des MOSFET/s (402) du canal n étant aligné dans la deuxième orientation (x, y) tournée par β par rapport à la première orientation (x', y'),

en particulier où β = 45 °.

9. L'agencement de capteur (100) selon la revendication 2,

la puce de capteur (200) comprenant un substrat de base (1),

la puce de capteur (200) comprenant une cavité (41) entre la membrane déformable (42) et le substrat (2),

la membrane déformable (42) séparant la cavité (41) et un orifice ouvert vers l'extérieur de la puce de capteur (200),

le substrat (2) étant fixé au substrat de base (1) avec la membrane déformable (42) tournée vers le substrat de base (1) et avec un espace (6) entre la membrane déformable (42) et le substrat de base (1) contribuant à l'orifice.

10. L'agencement de capteur (100) selon la revendication 9,

le substrat de base (1) comprenant une partie de support (7) à laquelle le substrat (2) est fixé, une partie de contact (8) comprenant des contacts électriques (16, 18) pour contacter électriquement la puce de capteur (200) de l'extérieur, et un ou plusieurs éléments de suspension pour suspendre la partie de support (7) depuis la partie de contact (8),

en particulier le substrat de base (1) ayant une extension de plan et la partie de support (7) entourant la partie de contact (8) dans le plan du substrat de base (1),

en particulier la partie de support (7) étant séparée de la partie de contact (8) à l'exception de l'un ou des plusieurs éléments de suspension par une ou plusieurs rainures (10) dans le substrat de base (1),

en particulier chaque élément de suspension contenant une crête entre la partie de support (7) et la partie de contact (8),

en particulier un ou plusieurs des éléments de suspension (9) comprenant au moins un chemin conducteur d'électricité pour connecter électriquement la partie de support (7) à la partie de contact (8).

11. L'agencement de capteur (100) selon la revendication 10,

le substrat de base (1) ayant une face avant (11) tournée vers la membrane déformable (42), une face arrière (12) contenant les contacts électriques (16, 18), et des trous (15) pour connecter électriquement la face avant (11) du substrat de base (1) à sa face arrière (12),

en particulier les trous (15) étant disposés dans la partie de support (7),

en particulier les trous (15) étant reliés électriquement à la partie de contact (7) par un ou plusieurs des éléments de suspension (9).

12. L'agencement de capteur (100) selon la revendication 4 et de l'une quelconque des revendications précédentes 9 à 11,

la cavité (41) étant une cavité disposée de manière exclusive dans une ou plusieurs couches de la pile de couches (24), et

la membrane déformable (42) étant fabriquée à partir d'un autre substrat (3) fixé à la pile de couches (24) du substrat (2),

comprenant des éléments d'espacement (5) entre le substrat de base (1) et le substrat (3, 2) ou l'autre substrat (3) pour construire l'espace (6), et

au moins une partie des éléments d'espacement (5) étant utilisés comme connexions électriques entre le couvercle (4) et le premier substrat (1).

13. Procédé d'opération d'un agencement de capteurs (100) comprenant une puce de capteur (200), la puce de capteur (200) comprenant un capteur (300), un capteur de contrainte (400) et un circuit intégré, le circuit intégré incluant le compensateur (500), le procédé comprenant

détecter une variable par le capteur (300) et fournir un signal de capteur correspondant (x),

détecter une contrainte dans la puce de capteur (200) par le capteur de contrainte (400) et fournir un signal de contrainte correspondant (y), et

déterminer un signal de capteur compensé en contrainte (z) par le compensateur (500) en fonction du signal de capteur (x) et du signal de contrainte (y),

la puce de capteur (200) comprenant des contacts électriques (16, 18) pour contacter la puce de capteur (200) de l'extérieur, et

le capteur de contrainte (400) étant disposé à un emplacement exposé à une contrainte mécanique induite ou transmise par les contacts électriques (16, 18) ou une autre liaison mécanique.

14. Elément de programme d'ordinateur, comprenant des moyens de code de produit informatique pour exécuter un procédé lorsqu'il est exécuté sur une unité de traitement comprise dans un compensateur (500) d'une puce capteur (200), comprenant

recevoir un signal de capteur (x) représentant une variable détectée par un capteur (300) de la puce de capteur (200),

recevoir un signal de contrainte (y) détecté par un capteur de contrainte (400) disposé dans la puce de capteur (200), et

déterminer un signal de capteur compensé en contrainte (z) en fonction du signal de capteur (x) et du signal de contrainte (y),

la puce de capteur (200) comprenant des contacts électriques (16, 18) pour contacter la puce de capteur (200) de l'extérieur, et

le capteur de contrainte (400) étant disposé à un emplacement exposé à une contrainte mécanique induite ou transmise par les contacts électriques (16, 18) ou une autre liaison mécanique.

FIG. 2

FIG. 1

**FIG. 3**

EP 3 056 865 B1

FIG. 4

FIG. 5

FIG. 6

FIG. 7

EP 3 056 865 B1

FIG. 8

**EP 3 056 865 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7704774 B2
- US 201113891 A1
- US 4530244 A
- US 5458000 A
- DE 19957556 A1
- DE 102011080229 A1
- EP 1152232 A1